# EUROPÄISCHE PATENTSCHRIFT

(11) **EP 3 457 234 B1**
(45) Veröffentlichungstag und Bekanntmachung des Hinweises auf die Patenterteilung: **12.07.2023**
(21) Anmeldenummer: 17191780.0
(22) Anmeldetag: 19.09.2017
(51) Int. Cl.: G05B 19/042

(54) **VERFAHREN ZUM COMPUTERUNTERSTÜTZTEN BEREITSTELLEN EINER IN FORM VON COMPUTERCODE VORLIEGENDEN INFORMATION ZU EINEM PROZESSMODUL**
METHOD FOR PROVIDING INFORMATION IN THE FORM OF COMPUTER CODE TO A PROCESS MODULE WITH THE ASSISTANCE OF A COMPUTER
PROCÉDÉ DESTINÉ À LA FOURNITURE ASSISTÉE PAR ORDINATEUR D'UNE INFORMATION SOUS FORME DE CODE INFORMATISÉ POUR UN MODULE DE PROCESSUS

(43) Veröffentlichungstag der Anmeldung: 20.03.2019
(73) Patentinhaber: ABB Schweiz AG, 5400 Baden (CH)
(72) Erfinder: Hoernicke, Mario, 76829 Landau (DE); Stark, Katharina, 69469 Weinheim (DE)
(74) Vertreter: Zimmermann & Partner Patentanwälte mbB

(56) Entgegenhaltungen:
- DE-A1-102012 110 802
- US-A1- 2005 050 311
- US-A1- 2008 046 259

## Beschreibung

Die Erfindung betrifft ein Verfahren zum computerunterstützten Bereitstellen einer in Form von Computercode vorliegenden Information zu einem Dienst eines Prozessmoduls, welches mit anderen Prozessmodulen koppelbar ist und so in einer automatisierten Prozessstrecke zur Umsetzung eines technischen Prozesses, insbesondere eines chemietechnischen oder pharmazietechnischen Prozesses, unter Ausführung eines Dienstes einsetzbar ist.

Die Modularisierung verfahrenstechnischer Anlagen wird vor allem in der Chemie- und Pharmaindustrie als hervorragende Möglichkeit wahrgenommen, zeitökonomisch und zu geringen Kosten Prozessstrecken zu bauen und einzusetzen, und diese hierbei auch wieder umbauen zu können. Dies lässt sich vor allem auch nutzen, um chemische und pharmazeutische Produkte in genau passenden technischen Prozessen in eher kleineren Mengen herzustellen.

Dienste (engl. "Services") stellen einzelne Funktionen des Prozessmoduls im Prozess dar, wie etwa Temperieren, Dosieren, Rühren etcetera. In der Regel kann ein Prozessmodul mehrere Dienste ausführen. Die Prozessmodule sollen durch Aufruf der Dienste objektorientiert und zustandsbasiert angesteuert werden.

Ein einzelnes Prozessmodul umfasst eine Vielzahl von Komponenten, die zusammen für die Ausführung der einzelnen Dienste verantwortlich sind, und jedes Prozessmodul verfügt auch über eine eigene Steuereinheit für diese Komponenten. Eine übergeordnete Prozesssteuereinheit (in der sog. Prozessführungsebene) soll über eine Darstellung des Prozessmoduls oder idealerweise des gerade ausgeführten Dienstes verfügen, sie kommuniziert mit dem Prozessmodul und steuert extern die Steuereinheit des Prozessmoduls an, um die Dienste abzurufen und deren Einzelschritte oder Zustände einzustellen. Es ist hierzu erforderlich, dass die übergeordnete Prozesssteuereinheit über eine Information zu dem Dienst und dem Prozessmodul verfügt, die die o.g. Darstellung beinhaltet, angibt, wie die Kommunikation zu dem Prozessmodul zu erfolgen hat, und wie ein Dienst durch Steuerung auszuführen ist. Eine solche Information wird im Fachgebiet als "Module Type Package", MTP, bezeichnet. In der Industrie in Deutschland gibt es Bestrebungen, die Schnittstellen zwischen Prozessführungsebene und Prozessmodulen zu vereinheitlichen, insbesondere was die Darstellung in Codes wie etwa dem MTP angeht. Die VDE-Richtlinie 2658 ist ein erster Schritt in Richtung Normierung hierzu.

Die Generierung von solchen Informationen wie des MTP ist aufwendig, da sie einerseits auf Vorabinformationen über das Modul (zumeist vom Hersteller des Moduls) aufbaut, wobei andererseits bei Verschaltung von Modulen unterschiedlicher Hersteller in einer Prozessstrecke ein Format benötigt wird, das herstellerübergreifend verwendbar ist. Bisherige Lösungen sind von und bei den Herstellern von Modulen verwirklicht. Jedoch können so die vielfältigen Möglichkeiten der Prozessmodule, was die Ausgestaltung von Diensten angeht, nicht immer optimal genutzt werden. Es wäre wünschenswert, wenn Dienste von Prozessmodulen leichter definiert werden könnten.

DE 10 2012 110 802 A1 beschreibt ein Verfahren zur Überwachung, Steuerung und Datenerfassung von verteilten Systemkomponenten eines Automatisierungssystems. Funktionen der Systemkomponenten werden als Services bereitgestellt und über einen Service-Bus angeboten und/oder abgefragt.

US 2008/046259 A1 beschreibt ein Verfahren für einen Zustandsübergang in Sprachsystemen. Stapelbare Zustandsmakros mit einer Mehrzahl von Anweisungen werden erzeugt; der gegenwärtige Zustand wird gesichert, bevor ein anderes Makro ausgeführt wird; ein Wiederherstellen des vorherigen Zustands wird ermöglicht, nachdem eine Mehrzahl von Anweisungen vollständig sind. Einem Benutzer wird ermöglicht, Sprachanweisungen zu äußern, um den Zustand von Komponenten oder des gesamten Sprachsystems in den vorherigen Zustand oder einen bekannten Ausgangszustand zurückzusetzen.

US 2005/050311 A1 beschreibt ein Verfahren und ein System zum Verwalten von Dienstzustandsdaten eines Dienstes in einer dienstorientierten Architektur. Ein ansteckbarer Metadatenprozessor wird eingerichtet, der ein plattformunabhängiges, erweiterbares Metadateninformationsmodell einrichtet, eine erweiterte Metadatendefinition mit einem erweiterbaren Satz von Dienstzustandsdatenattributen einrichtet, einen oder mehrere erweiterbare Semantikprozessoren konfiguriert, einen Steuerungs-Metadatenprozessor konfiguriert, und Kontrakte zwischen den Semantikprozessoren definiert.

Es ist Aufgabe der vorliegenden Erfindung, die Entwicklung und Vorgabe von Diensten zu erleichtern, und dies idealerweise für beliebige Prozessmodule.

Die Aufgabe wird durch das Verfahren mit den Merkmalen nach Anspruch 1 gelöst. Vorteilhafte Ausgestaltungen sind in den Unteransprüchen angegeben.

Das erfindungsgemäße Verfahren zum computerunterstützten Bereitstellen einer in Form von Computercode vorliegenden Information zu einem Dienst eines Prozessmoduls, welches mit anderen Prozessmodulen koppelbar ist und so in einer automatisierten Prozessstrecke zur Umsetzung eines technischen, insbesondere chemietechnischen oder pharmazietechnischen Prozesses unter Ausführung eines Dienstes einsetzbar ist, umfasst die in Anspruch 1 definierten Schritte.

Indem das Verfahren an ein vorgegebenes Zustandsdiagramm anknüpft und die Zustände des zu definierenden Dienstes aus den Zuständen auszuwählen sind, die das vorgegebene Zustandsdiagramm beinhaltet, ist per se bei der Definition der Dienste für eine Vereinheitlichung gesorgt. Das erleichtert es, Dienste unabhängig vom Hersteller des Prozessmoduls vorzugeben. Die Einheiten beziehungsweise Komponenten auf der Liste sind oder umfassen typischerweise Sensoren und Aktoren des Prozessmoduls. Durch die Zuordnungen in den einzelnen Zuständen gemäß der ersten Tabelle werden somit (logische, aber vor allem physikalische und ggf. chemische) Wirkzusammenhänge angegeben, die bei den Zuständen des Diensts gelten sollen. Durch die Zuordnungen gemäß der zweiten Tabelle wird somit der (logische, aber vor allem physikalische und ggf. chemische) Wirkzusammenhang des Diensts als Ganzem angegeben. In einem hier nicht näher verfolgten speziellen Aspekt kommt das Verfahren auch ohne den letzten Schritt aus.

Bei einer bevorzugten Ausführungsform des Verfahrens ist ein Teil der Zustände aus dem vorgegebenen Zustandsdiagramm bei jedem Prozessmodul als zwingend vorausgesetzt, und die Auswahlmöglichkeit betrifft nur zumindest einen weiteren Zustand oder zumindest eine Zustandsgruppe. Bei manchen Zustandsdiagrammen sind die Zustände nämlich dergestalt definiert, dass einige derselben in jedem Dienst existieren, z.B. ein Anfangszustand, ein Zustand des Betriebs "Running" und ein Endzustand. Wenn kein Zustand als zwingend vorausgesetzt wird, kann man das Verfahren so ausgestalten, dass zumindest zwei Zustände, ggf. zumindest drei Zustände, oder eine höhere Mindestanzahl, durch die Bedienperson festzulegen sind.

Für die Zwecke insbesondere der chemischen und pharmazeutischen Industrie ist es vorteilhaft, wenn das Zustandsdiagramm dem Zustandsmodell aus der DIN EN 61512 ed. 2 entspricht. Dasselbe Zustandsmodell ist genauso auch in der IEC 61512 spezifiziert.

Da das Verfahren der Festlegung eines Dienstes mit seinen Eigenschaften dient, ist es passend, wenn auch eine Möglichkeit zur Benennung des Dienstes des Prozessmoduls durch die Bedienperson gegeben wird, dies vorzugsweise zu Beginn des Verfahrens. Sonst müsste der Bedienperson ein Name vorgegeben werden, der eine spätere schnelle Erfassung des Inhalts des Dienstes möglicherweise erschwert.

Das Verfahren kann dahingehend erweitert werden, dass für die Bedienperson zumindest zu einem Teil der Zustände eine Möglichkeit zur Definition eines Parameters bereitgestellt wird und eine entsprechende Eingabe zur Definition des Parameters empfangen wird. Solche Parameter können beim Ablauf des Prozesses in der Prozessstrecke durch Einheiten außerhalb des jeweiligen Prozessmoduls einen Wert zugewiesen bekommen. Auch kann der Wert des Parameters beim Ablauf des Prozesses in der Prozessstrecke durch einen Operator (in der Fabrik anwesende verantwortliche Person) zuweisbar sein. Beispielsweise kann der Parameter eine Betriebstemperatur einer Komponente oder des zu verarbeitenden Materials in einer Komponente betreffen. Der Dienst ist dann in einem beziehungsweise für einen ganzen Temperaturbereich ausführbar, und bei jeder Ausführung wird eine aktuelle Temperatur ein- oder vorgegeben.

In diesem Fall ist es vorteilhaft, wenn die ersten und ggf. auch zusätzlich oder alternativ die zweiten Daten Zuordnungen zwischen Werten für die definierten Parameter und (anderen) Werten für die definierten Parameter angeben. Dabei wird dann berücksichtigt, dass die physikalischen und chemischen Wirkzusammenhänge durch den Parameter beschreibbar sind. Die Zuordnungen können auch beinhalten, dass nur der Parameter als Ursache angegeben wird, aber als Wirkung ein zweites Signal mit dem Parameter variiert (oder bei komplexeren Zusammenhängen sogar ein erstes Signal). Dabei wird dann berücksichtigt, dass die physikalischen und chemischen Wirkzusammenhänge bei unterschiedlichen Werten für den Parameter unterschiedliche Folgen auf der Aktorenseite (ggf. auch bei den Sensoren) bedingen können.

Bei einer bevorzugten Ausführungsform des Verfahrens ist vorgesehen, dass die in Computercode vorliegende Information in einer solchen Form bereitgestellt wird, dass sie durch zwei unterschiedliche Editoren in zwei unterschiedliche durch eine Steuereinrichtung ausführbare Codes, insbesondere speicherprogrammierbare-Steuerungs-Codes, SPS-Codes, kompilierbar ist. Auf diese Weise ist es möglich, vom Hersteller sowohl des Prozessmoduls als auch der später eingesetzten Prozessführungsebene unabhängig die Dienste vorzugeben, und aus der durch das Verfahren bereitgestellten Information sogleich einen Steuercode abzuleiten.

Bei einer bevorzugten Ausführungsform des Verfahrens ist vorgesehen, dass anhand der in Computercode vorliegenden Information eine optische, insbesondere grafische Darstellung, des Dienstes des Prozessmoduls generiert wird. Eine solche Darstellung erleichtert es der Bedienperson, die den Dienst entwirft, sowie späteren Nutzern des Dienstes (etwa beim Entwerfen der gesamten Prozessstrecke, der sog. Orchestrierung), die Funktionen des Dienstes zu erfassen.

Nachfolgend werden bevorzugte Ausführungsformen der Erfindung unter Bezug auf die Zeichnung näher beschrieben. Hierin zeigt:
- Fig. 1: eine Darstellung (als Diagramm) eines bei der Erfindung bevorzugt eingesetzten Zustandsmodells,
- Fig. 2: eine Bildschirmansicht bei Ausführung eines Computerprogramms zur Verwirklichung des erfindungsgemäßen Verfahrens,
- Fig. 3: ein Flussschaubild einer bevorzugten Ausführungsform des erfindungsgemäßen Verfahrens,
- Fig. 4: eine vereinfachte Darstellung einer Tabelle zur Erläuterung des Schrittes des Zuordnens in der bevorzugten Ausführungsform des erfindungsgemäßen Verfahrens.

Ein in den Figuren nicht gezeigtes Prozessmodul kann mit anderen Prozessmodulen zu einer Prozessstrecke verschaltet werden, in der ein chemischer oder pharmazietechnischer Prozess ausführbar ist, wobei jedes Prozessmodul in einem bestimmten Prozess eine bestimmte Funktion aus einer Vielzahl von möglichen Funktionen ausübt. Solche verfahrenstechnischen Funktionen werden auch als Dienste oder englisch "Services" bezeichnet beziehungsweise sind in solche "gekapselt". Das nachfolgend vorgestellte Computerprogramm hat die Aufgabe, mit der Unterstützung eines (Personal-)Computers (beziehungsweise Rechners) derartige Dienste zu definieren. Zugleich soll zu dem Dienst eine Information bereitgestellt werden, auf deren Grundlage einer übergeordneten Steuereinheit im Prozess (Prozessführungsebene) eine Ansteuerung des Prozessmoduls ermöglicht werden kann. Vorzugsweise liegt diese Information dann im Code IEC 61131-3 vor. Ein vollständiges Datenpaket zu einem Prozessmodul wird als "Module Type Package", MTP, bezeichnet.

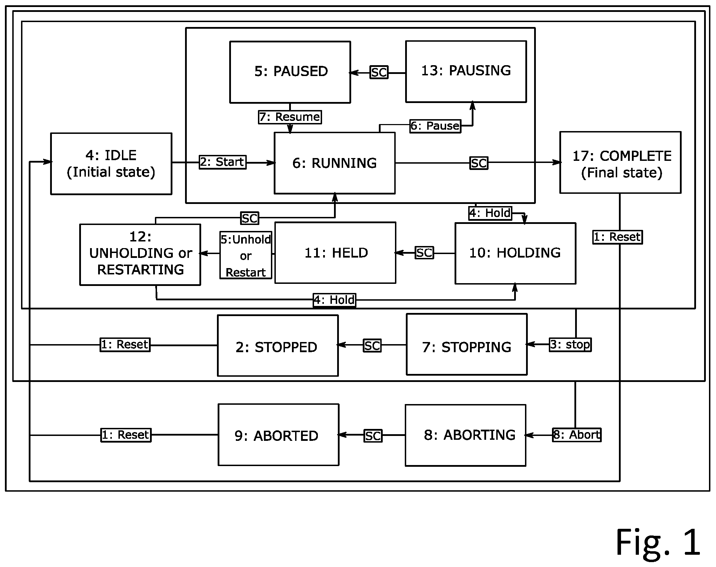

Das Computerprogramm definiert jeden Dienst anhand desselben Zustandsmodells, das als Zustandsdiagramm in Fig. 1 dargestellt ist. Es handelt sich um das Zustandsmodell nach DIN EN 61512 ed. 2 beziehungsweise der IEC 61512. Das Zustandsmodell beinhaltet zunächst die bei jedem Dienst zwingend vorhandenen Zustände *"Idle", "Running, "Aborting"* und *"Aborted".* Es handelt sich hierbei um den Anfangszustand (auch: Initialzustand), den Zustand der Ausführung der verfahrenstechnischen Funktion und eine Abbruchschleife, die beim ungeplanten Abbrechen des Dienstes durchlaufen wird. Die Schleifen für das Pausieren des Dienstes (mit *"Pausing"* und *"Paused"*)*,* für das Halten des Dienstes (mit *"HoLding* ", *"HeLd"* und *"Unholding* " oder *"Restarting* ") und für das Stoppen (mit *"Stopping"* und *"Stopped"*) des Dienstes sind frei zuwählbar, können also je nach Bedarf seitens des Modellbauers implemetiert oder weggelassen werden. Bei selbstabschließenden Diensten (sogenannte *"self-completing services* ") ist der Zustand *"Complete"* enthalten. Durchgehende Dienste (sogenannte *"continuous services* ") hingegen erreichen niemals ein festgesetztes Ziel, sondern laufen kontinuierlich mit veränderbaren Parametern. Daher ist es empfehlenswert, in solchen Diensten die Stop-Schleife zu implementieren. Bei verfahrenstechnischen Funktionen, bei denen sich ein ungeplantes und ein geplantes Stoppen nicht voneinander unterscheiden, genügt die Implementierung der Aborting-Schleife.

Beim vorliegenden Computerprogramm wird ferner die Möglichkeit gegeben, die weiteren Schleifen wie Holding oder Pausing hinzu zu wählen, wenn der Dienst komplex ist beziehungsweise sein soll. Diese Schleifen sind dabei nur als Gesamtheit auswählbar, mit den transienten Zuständen (endend auf "*ing"*), die automatisch über den Zustandsübergang *"Self-Complete"* (siehe "*SC"* in der Fig. 1) in den Folgezustand übergehen.

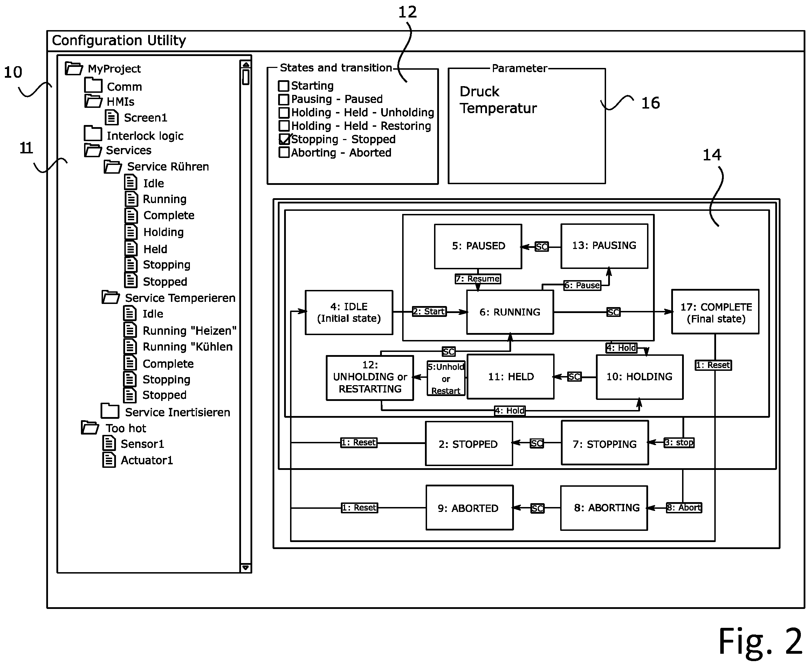

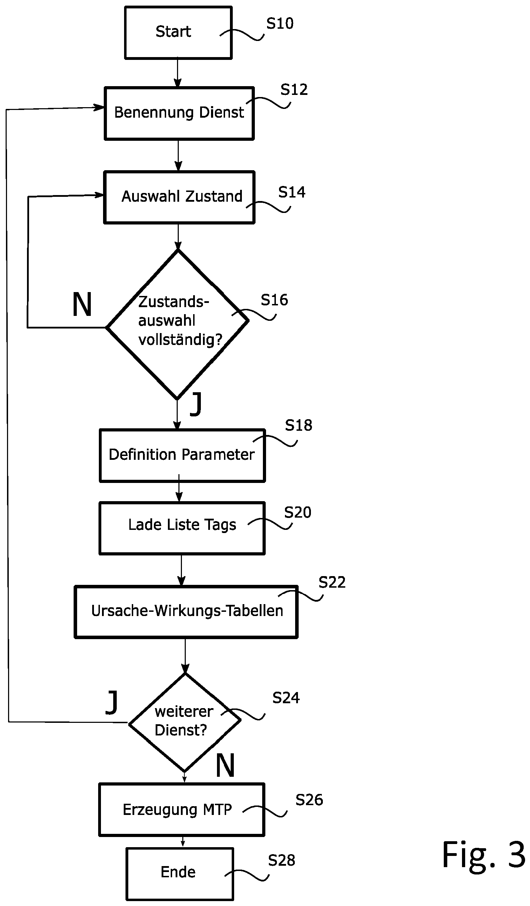

Das Verfahren wird in einer Ausführungsform nachfolgend unter Bezug auf die entsprechende Bildschirmdarstellung wie in Fig. 2 gezeigt sowie zugleich unter Bezug auf das Flussschaubild aus Fig. 3 beschrieben.

Das Verfahren beginnt in der Ausführungsform mit Schritt S10, bei dem das Programm gestartet wird, typischerweise also ein Hochfahren erfolgt. Eine nicht gezeigte Maske ermöglich in Schritt S12 die Eingabe von alphanumerischen Zeichen zur Benennung eines nachfolgend zu definierenden Dienstes. Nachfolgend wird für die Schritte S14 bis S18 eine Bildschirmdarstellung wie in Fig. 3 gezeigt gegeben. Der im Ganzen mit 10 bezeichnete Rahmen der Bildschirmdarstellung umfasst zunächst ein Feld (oder Teilfenster) 11 mit einem Ordner zur Ablage und Angabe der einzelnen Dienste sowie der zugehörigen Zustände. Ein anderes Feld beziehungsweise Teilfenster 12 ermöglicht im Rahmen des Schrittes S14 durch Ankreuzen die Auswahl einzelner Zustände und Zustandsgruppen, wobei die Zustände *"IdLe", "Running, "Aborting"* und *"Aborted"* als zwingend vorhanden vorausgesetzt sind. Das Zustandsdiagramm aus Fig. 1 wird dem Benutzer im Fenster 14 angezeigt. Der Schritt S16 führt bei nicht vollständiger Zustandsauswahl zum Schritt S14 zurück.

Ein Teilfenster 16 erlaubt es dem Benutzer, in Schritt S18 Parameter zu definieren, die als Eingangsgröße oder als Stellgröße bei dem Prozess eine Rolle spielen sollen. Die Fig. 2 zeigt beispielhaft die Definition der physikalischen Größen Druck und Temperatur als Parameter.

Im Schritt S20 wird eine Liste der so genannten "Tags" geladen, entweder aus einem Speicher des Rechners selbst oder von außerhalb des Rechners. Ein "Tag" ist jede Komponente des Prozessmoduls, die Eingangssignale bereitstellt (typischerweise tun dies Sensoren) und/oder die auf Ausgangssignale reagiert (wie typischerweise Aktoren).

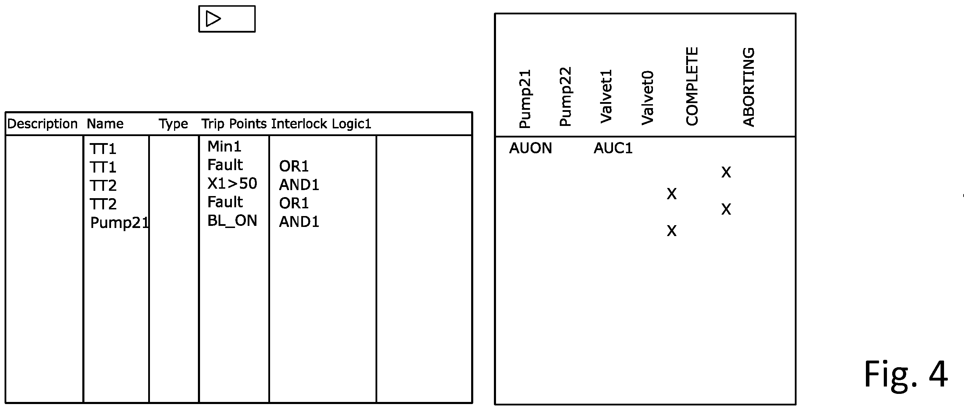

In Schritt S22 werden sodann Tabellen nach Art der in Fig. 4 gezeigten definiert. So wird etwa angegeben, dass beim Erfassen des Signals *"Min1*" von einem als "*TT1*" benannten Sensor einer Pumpe "*Pump21* " das Signal AUON und einem Ventil *"Valvet1*" das Signal AUC1 gesendet werden soll. Die Spalte *"Interlock Logic 1 "* verknüpft mehrere Eingangssignale logisch. Die Angabe *"AND1*" verknüpft die beiden Signale von einem Sensor *"TT2"* und von "*Pump21* ": Hat *"TT2*"das Signal *"X1>1"* und hat zugleich (UND-Verknüpfung) "*Pump21* "das Signal "*BL-ON",* dann wird zum Zustand *"Complete"* übergegangen. Letzteres beinhaltet eine sogenannte Transitionsbedingung.

Die Tabellen werden auch als *"Extended Cause* & *Effect"-* Tabellen bezeichnet und können ausgestaltet sein wie es in der EP 2 899 630 A1 beschrieben ist.

Die Tabellen werden in der Ausführungsform des Verfahrens zu sämtlichen Zuständen definiert, sie sind als erste Daten zu verstehen. Im nachfolgenden Schritt kann nun anhand der ausgewählten Zustände und der zugehörigen Tabellen ein vollständiger Wirkzusammenhang zwischen den Eingangssignalen für das gesamte Prozessmodul (bei dem definierten Dienst) und den Ausgangssignalen desselben angegeben werden, etwa wiederum in Form einer Tabelle. Dies sind dann zweite Daten. Diese zweiten Daten können alleine bereits als in Form von Computercode vorliegende Information das Ziel des Verfahrens sein, es können aber noch weitere Informationen hinzutreten. So kann eine optische, insbesondere grafische Darstellung des Dienstes des Prozessmoduls (Schaubild) generiert werden, um dem kundigen Betrachter die Wirkweise besser zu veranschaulichen.

In Schritt S24 wird der Benutzer über eine Bildschirmdarstellung oder dgl. gefragt, ob er einen weiteren Dienst definieren möchte. Falls ja, wird zum Schritt S12 zurückgekehrt. Falls alle Dienste definiert sind, wird zum Schritt S26 übergegangen.

Die gewonnene Information wird vorzugsweise als IEC 61131-3- Code bereitgestellt und umfasst weiter vorzugsweise noch Angaben zum Kommunikationsverhalten des Prozessmoduls beziehungsweise dem verwendbaren Kommunikationsprotokoll. So lässt sich insgesamt gemäß Schritt S26 das MTP erzeugen, welches man später für die Ansteuerung des Prozessmoduls benötigt.

Mit dem MTP ist das Verfahren abgeschlossen, siehe Schritt S28 des Endes.

## Patentansprüche

1. Verfahren zum Definieren und Ausführen eines Dienstes eines Prozessmoduls aus einer Vielzahl von möglichen Diensten des Prozessmoduls, wobei das Prozessmodul mit anderen Prozessmodulen zu einer Prozessstrecke verschaltet ist, in der ein chemischer oder pharmazietechnischer Prozess ausführbar ist, wobei der Dienst eine verfahrenstechnische Funktion des Prozesses ist, wobei das Prozessmodul Modul-Eingangssignale entgegennimmt und Modul-Ausgangssignale ausgibt, und wobei das Prozessmodul eine Steuereinheit für Komponenten des Prozessmoduls aufweist, die zusammen für die Ausführung des Dienstes verantwortlich sind,
das Verfahren umfassend:
- Bereitstellen eines Zustandsdiagramms mit zumindest zwei Zuständen inklusive einem Anfangszustand und einem Endzustand für den Dienst;
- Bereitstellen einer Auswahlmöglichkeit für die Zustände aus dem Zustandsdiagramm;
- Bereitstellen einer Liste der Komponenten des Prozessmoduls, die als Sensoren Komponenten-Eingangssignale bereitstellen und/oder die als Aktoren auf Komponenten-Ausgangssignale reagieren;
- Erzeugen jeweils einer ersten Tabelle für jeden ausgewählten Zustand, wobei die erste Tabelle eine Ursache-Wirkung-Zuordnung von den Komponenten-Eingangssignalen, die bei dem ausgewählten Zustand möglich sind, zu den Komponenten-Ausgangssignalen angibt, die bei dem ausgewählten Zustand möglich sind;
- Erzeugen einer zweiten Tabelle für den Dienst unter Verwendung jeder der ersten Tabellen, wobei die zweite Tabelle eine Ursache-Wirkung-Zuordnung zwischen den Modul-Eingangssignalen und den Modul-Ausgangssignalen angibt;
- Erzeugen von Computercode, der eine Information zu dem Dienst des Prozessmoduls enthält, unter Verwendung der zweiten Tabelle, wobei die Information angibt, wie eine Kommunikation zu dem Prozessmodul erfolgt und wie der Dienst durch die Steuereinheit ausgeführt wird; und
- Ansteuern, mittels einer übergeordneten Prozesssteuereinheit, der Steuereinheit des Prozessmoduls zum Abrufen des Dienstes unter Verwendung der Information.

2. Verfahren nach Anspruch 1, wobei ein Teil der Zustände aus dem Zustandsdiagramm bei dem Prozessmodul als zwingend vorausgesetzt ist und die Auswahlmöglichkeit nur zumindest einen weiteren Zustand enthält.

3. Verfahren nach Anspruch 2, bei dem das Zustandsdiagramm dem Zustandsmodell aus der DIN EN 61512 ed. 2 beziehungsweise der IEC 61512 entspricht.

4. Verfahren nach einem der vorhergehenden Ansprüche, weiter umfassend:
- Bereitstellen einer Möglichkeit zur Benennung des Dienstes des Prozessmoduls.

5. Verfahren nach einem der vorhergehenden Ansprüche, weiter umfassend:
- zumindest zu einem Teil der Zustände, Bereitstellen einer Möglichkeit zur Definition eines Parameters, der eine Eingangsgröße oder Stellgröße des Prozesses ist,
wobei im Schritt des Erzeugens der jeweiligen ersten Tabelle für den jeweiligen ersten Zustand die Ursache-Wirkung-Zuordnung zusätzlich Zuordnungen zwischen Werten für den definierten Parameter und anderen Werten für den definierten Parameter angibt.

6. Verfahren nach einem der vorhergehenden Ansprüche, weiter umfassend:
- zumindest zu einem Teil der Zustände, Bereitstellen einer Möglichkeit zur Definition eines Parameters, der eine Eingangsgröße oder Stellgröße des Prozesses ist,
wobei im Schritt des Erzeugens der zweiten Tabelle die Ursache-Wirkung-Zuordnung zusätzlich Zuordnungen zwischen Werten für den definierten Parameter und anderen Werten für den definierten Parameter angibt.

7. Verfahren nach einem der vorhergehenden Ansprüche, bei dem die im Computercode enthaltene Information in einer solchen Form bereitgestellt wird, dass sie durch zwei unterschiedliche Editoren in zwei unterschiedliche durch die Steuereinheit ausführbare Codes kompilierbar ist.

8. Verfahren nach einem der vorhergehenden Ansprüche, weiter umfassend:
- Erzeugen einer grafischen Darstellung des Dienstes in Form eines Schaubilds.

## Claims

1. Method for defining and performing a service of a process module from a multiplicity of possible services of the process module, wherein the process module is connected up to other process modules to form a process line in which a chemical or pharmaceutical process can be performed, wherein the service is a process engineering function of the process, wherein the process module receives module input signals and outputs module output signals, and wherein the process module has a control unit for components of the process module that together are responsible for performing the service,
the method comprising:
- providing a state diagram having at least two states, including an initial state and a final state, for the service;
- providing a selection option for the states from the state diagram,
- providing a list of components of the process module that, as sensors, provide component input signals and/or that, as actuators, react to component output signals;
- generating a respective first table for each selected state, the first table indicating a cause/effect association between the component input signals that are possible for the selected state and the component output signals that are possible for the selected state;
- generating a second table for the service by using each of the first tables, the second table indicating a cause/effect association between the module input signals and the module output signals;
- generating computer code, which contains information about the service of the process module, by using the second table, the information indicating how communication with the process module takes place and how the service is performed by the control unit; and
- driving, by means of a superordinate process control unit, the control unit of the process module to retrieve the service by using the information.

2. Method according to Claim 1, wherein some of the states from the state diagram are an absolute prerequisite for the process module and the selection option contains only at least one further state.

3. Method according to Claim 2, wherein the state diagram corresponds to the state model from DIN EN 61512 ed. 2 or IEC 61512.

4. Method according to one of the preceding claims, further comprising:
- providing an option to name the service of the process module.

5. Method according to one of the preceding claims, further comprising:
- at least for some of the states, providing an option to define a parameter that is an input variable or manipulated variable of the process,
wherein in the step of generating the respective first table for the respective first state the cause/effect association additionally indicates associations between values for the defined parameter and other values for the defined parameter.

6. Method according to one of the preceding claims, further comprising:
- at least for some of the states, providing an option to define a parameter that is an input variable or manipulated variable of the process,
wherein in the step of generating the second table the cause/effect association additionally indicates associations between values for the defined parameter and other values for the defined parameter.

7. Method according to one of the preceding claims, in which the information present in the computer code is provided in a form such that it is compilable by two different editors into two different codes executable by the control unit.

8. Method according to one of the preceding claims, further comprising:
- generating a graphical representation of the service in the form of a diagram.

## Revendications

1. Procédé destiné à définir et à mettre en oeuvre un service d'un module de processus parmi une pluralité de services possibles du module de processus, dans lequel le module de processus est connecté à d'autres modules de processus pour former une section de processus dans laquelle un processus chimique ou pharmaceutique peut être mis en oeuvre, dans lequel le service est une fonction technique du processus, dans lequel le module de processus reçoit des signaux d'entrée de module et délivre des signaux de sortie de module, et dans lequel le module de processus comporte une unité de commande destinée à des composants du module de processus qui sont collectivement responsables de la mise en oeuvre du service,
le procédé comprenant :
- la fourniture d'un diagramme d'états comportant au moins deux états, y compris un état initial et un état final pour le service ;
- la fourniture d'une possibilité de sélection des états à partir du diagramme d'états ;
- la fourniture d'une liste des composants du module de processus qui, en tant que capteurs, fournissent des signaux d'entrée de composants et/ou qui, en tant qu'actionneurs, réagissent à des signaux de sortie de composants ;
- la génération d'une première table pour chaque état sélectionné, dans lequel la première table indique une association de cause à effet entre les signaux d'entrée de composants possibles dans l'état sélectionné et les signaux de sortie de composants possibles dans l'état sélectionné ;
- la génération d'une deuxième table pour le service en utilisant chacune des premières tables, dans lequel la deuxième table indique une association de cause à effet entre les signaux d'entrée de module et les signaux de sortie de module ;
- la génération d'un code informatique contenant une information concernant le service du module de processus, en utilisant la deuxième table, dans lequel ladite information indique comment la communication avec le module de processus est effectuée et comment le service est mis en oeuvre par l'unité de commande ; et
- la commande, au moyen d'une unité de commande de processus de niveau supérieur, de l'unité de commande du module de processus pour appeler le service en utilisant ladite information.

2. Procédé selon la revendication 1, dans lequel une partie des états du diagramme d'états est considérée comme étant obligatoire pour le module de processus et la possibilité de sélection ne contient qu'au moins un autre état.

3. Procédé selon la revendication 2, dans lequel le diagramme d'états correspond au modèle d'état de la norme DIN EN 615 12 éd. 2 ou de la norme IEC 61512.

4. Procédé selon l'une des revendications précédentes, comprenant en outre :
- la fourniture d'une possibilité de désignation du service du module de processus.

5. Procédé selon l'une des revendications précédentes, comprenant en outre :
- au moins pour une partie des états, la fourniture d'une possibilité de définition d'un paramètre qui est une grandeur d'entrée ou une grandeur de réglage du processus,
dans lequel, lors de l'étape de génération de la première table respective pour le premier état respectif, l'association de cause à effet indique en outre des associations entre des valeurs du paramètre défini et d'autres valeurs du paramètre défini.

6. Procédé selon l'une des revendications précédentes, comprenant en outre :
- la fourniture, au moins pour une partie des états, d'une possibilité de définition d'un paramètre qui est une grandeur d'entrée ou une grandeur de réglage du processus,
dans lequel, lors de l'étape de génération de la deuxième table, l'association de cause à effet indique en outre des associations entre des valeurs du paramètre défini et d'autres valeurs du paramètre défini.

7. Procédé selon l'une des revendications précédentes, dans lequel l'information contenue dans le code informatique est fournie sous une forme telle qu'elle puisse être compilée par deux éditeurs différents en deux codes différents exécutables par l'unité de commande.

8. Procédé selon l'une des revendications précédentes, comprenant en outre :
- la génération d'une représentation graphique du service sous la forme d'un graphique.
